# EUROPEAN PATENT APPLICATION

(11) **EP 2 706 784 A2**
(43) Date of publication of application: **12.03.2014**
(21) Application number: 13183792.4
(22) Date of filing: 10.09.2013
(51) Int. Cl.: H04W 36/14, H04W 36/22

(54) **Apparatuses and methods for switching data traffic between heterogeneous networks**

(30) Priority: 11.09.2012 US 201261699446 P; 22.11.2012 US 201261678293 P; 18.01.2013 US 201361754193 P; 06.03.2013 US 201361773352 P; 04.09.2013 US 201314017470
(71) Applicant: Acer Incorporated, Taipei County 221 (TW)
(72) Inventor: Ye, Shiang-Rung, 221 New Taipei City (TW)
(74) Representative: Michalski Hüttermann & Partner Patentanwälte

(57) **Abstract**

A mobile communication device is provided with a first wireless module, a second wireless module, and a controller module. The first wireless module performs wireless transmissions and receptions to and from a telecommunication network using a cellular technology. The second wireless module performs wireless transmissions and receptions using a Short Range Wireless (SRW) technology. The controller module is configured to perform operations for communication controls, and the operations include detecting a connection loss to an Access Point (AP) via the second wireless module after data traffic which is to be directed to and from the mobile communication device has been offloaded from the telecommunication network to the AP, prioritizing a connection establishment procedure for reconnecting to the telecommunication network in response to the connection loss, and transceiving the data traffic directly to and from the telecommunication network after successfully reconnecting to the telecommunication network.

## Description

### CROSS REFERENCE TO RELATED APPLICATIONS

This Application claims priority of U.S. Application No. 14/017,470, filed on September 04, 2013, which further claims priorities of U.S. Provisional Application No. 61/699,446, filed on September 11, 2012, U.S. Provisional Application No. 61/729,367, filed on November 22, 2012, U.S. Provisional Application No. 61/754,193, filed on January 18, 2013, and U.S. Provisional Application No. 61/773,352, filed on March 06, 2013, and the entirety of which is incorporated by reference herein.

### BACKGROUND OF THE INVENTION

### Field of the Invention

The invention generally relates to provision of communication services across heterogeneous networks, and more particularly, to apparatuses and methods for switching the data traffic, which has been offloaded from a telecommunication network to an Access Point (AP) utilizing a Short Range Wireless (SRW) technology, back to the telecommunication network.

### Description of the Related Art

With growing demand for ubiquitous computing and networking, various wireless technologies have been developed, such as the Short Range Wireless (SRW) technologies, including the Wireless Fidelity (WiFi) technology, Bluetooth technology, and the Zigbee technology, etc., and also, the telecommunication technologies, including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, and Time- Division LTE (TD-LTE) technology, etc. For user convenience and flexibility, most Mobile Stations (MSs) (or may be referred to as User Equipments (UEs)) nowadays are equipped with more than one wireless communication module for supporting different wireless technologies. However, each wireless technology has its own features, such as bandwidth, average coverage, and service rate, etc. Particularly, the bandwidth and coverage provided to an MS by a wireless network may vary according to the location conditions of the MS and/or the time conditions.

Taking an MS equipped with a WCDMA module and a WiFi module for example, it may selectively obtain wireless services using the WCDMA technology or the WiFi technology. Generally, the wireless services obtained using the WCDMA technology have a rather limited bandwidth, but better mobility, while the wireless services obtained using the WiFi technology have a sufficient bandwidth, but lacks mobility. Thus, when the MS is connected to a telecommunication network for obtaining wireless services which result in a large amount of data traffic, the data traffic may be preferably offloaded from the telecommunication network to a WiFi AP. That is, the MS may be handed over from the telecommunication network to the WiFi AP. However, there is a situation where the MS may lose the connection to the WiFi AP or any other WiFi APs nearby, which would cause a serious break-off of the ongoing wireless services.

### BRIEF SUMMARY OF THE INVENTION

In order to solve the aforementioned problem, the invention proposes apparatuses and methods for switching the data traffic, which has been offloaded from the telecommunication network to an AP utilizing an SRW technology, back to the telecommunication network as fast as possible, so as to prevent the breaking-off of the ongoing wireless services.

In one aspect of the invention, a mobile communication device is provided. The mobile communication device comprises a first wireless module, a second wireless module, and a controller module. The first wireless module is configured to perform wireless transmissions and receptions to and from a telecommunication network using a cellular technology. The second wireless module is configured to perform wireless transmissions and receptions using an SRW technology. The controller module is configured to perform operations for communication controls, wherein the operations comprise detecting a connection loss to an AP via the second wireless module after data traffic which is to be directed to and from the mobile communication device has been offloaded from the telecommunication network to the AP, prioritizing a connection establishment procedure for reconnecting to the telecommunication network in response to the connection loss, and transceiving the data traffic directly to and from the telecommunication network after successfully reconnecting to the telecommunication network.

In another aspect of the invention, a method for switching data traffic associated with a mobile communication device between a telecommunication network and an AP utilizing an SRW technology is provided. The method comprises the steps of: offloading, by the telecommunication network, the data traffic which is to be directed to and from the mobile communication device to the AP; detecting, by the mobile communication device, a connection loss to the AP after the offloading of the data traffic; prioritizing, by the mobile communication device, a connection establishment procedure for reconnecting to the telecommunication network in response to the connection loss; and transceiving, directly by the telecommunication network and the mobile communication device, the data traffic therebetween after the mobile communication device successfully reconnects to the telecommunication network..

Other aspects and features of the present invention will become apparent to those with ordinarily skill in the art upon review of the following descriptions of specific embodiments of the mobile communication devices and the methods for switching data traffic associated with a mobile communication device between a telecommunication network and an AP.

### BRIEF DESCRIPTION OF DRAWINGS

The invention can be more fully understood by reading the subsequent detailed description and examples with references made to the accompanying drawings, wherein:

Fig. 1 is a block diagram of a wireless communications environment according to an embodiment of the invention;

Fig. 2 is a block diagram illustrating the mobile communication device 110 according to an embodiment of the invention;

Fig. 3 is a flow chart illustrating the method for switching data traffic associated with a mobile communication device between a telecommunication network and an AP utilizing an SRW technology according to an embodiment of the invention; and

Figs. 4A and 4B show a message sequence chart illustrating the switching of data traffic associated with the mobile communication device 110 between the telecommunication network 120 and the AP 140 according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

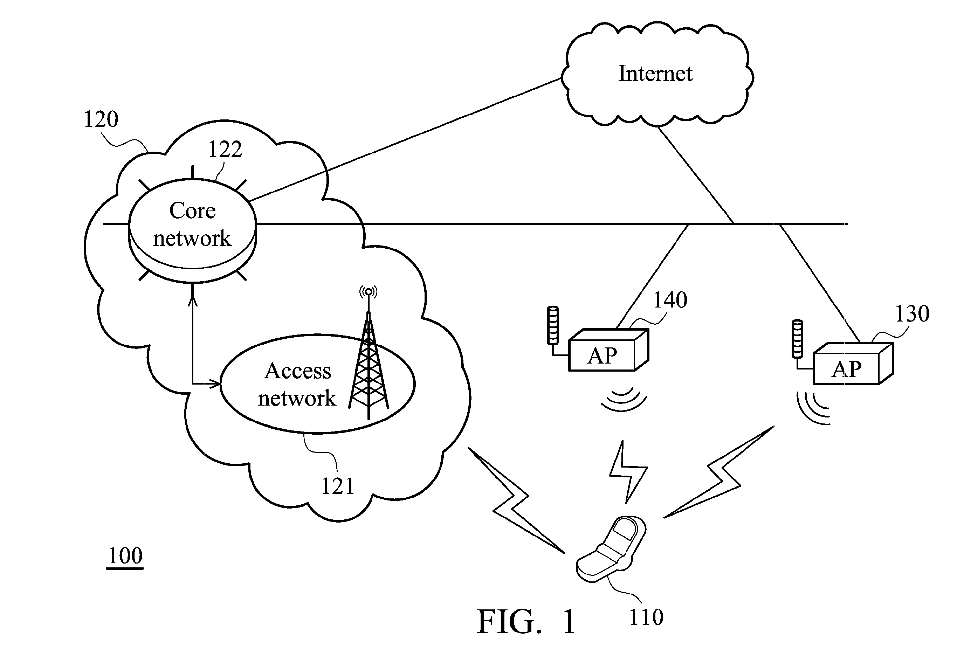

Fig. 1 is a block diagram of a wireless communications environment according to an embodiment of the invention. The wireless communications environment 100 comprises a mobile communication device 110, a telecommunication network 120 and APs 130 and 140. The mobile communication device 110 may be a smart phone, a panel Personal Computer (PC), a laptop computer, or any computing device supporting at least the SRW technology utilized by the APs 130 and 140 and the cellular technology utilized by the telecommunication network 120. The mobile communication device 110 may selectively connect to one or both of the telecommunication network 120 and the AP 130 or 140 for obtaining wireless services. The telecommunication network 120 may be a GSM system, GPRS system, WCDMA system, CDMA-2000 system, TD-SCDMA system, WiMAX system, LTE system, or TD-LTE system, etc., depending on the telecommunication technology in use. The telecommunication network 120 comprises at least an access network 121 and a core network 122, wherein the access network 121 is controlled by the core network 122 to provide the functionality of wireless transceiving for the telecommunication network 120. For example, if the telecommunication network 120 is a WCDMA system, the access network 121 may be a Universal Terrestrial Radio Access Network (UTRAN) and the core network 122 may be a General Packet Radio Service (GPRS) core which includes a Home Location Register (HLR), at least one Serving GPRS Support Node (SGSN), and at least one Gateway GPRS Support Node (GGSN). Alternatively, if the telecommunication network 120 is an LTE or LTE-Advanced system, the access network 121 may be an Evolved-UTRAN (E-UTRAN) and the core network 122 may be an Evolved Packet Core (EPC) which includes a Home Subscriber Server (HSS), Mobility Management Entity (MME), Serving Gateway (S-GW), and Packet Data Network Gateway (PDN-GW or P-GW).

The APs 130 and 140 may each form a SRW network, implemented as alternatives for providing wireless services for the mobile communication device 110. For example, the APs 130 and 140 may be installed by or operate in cooperation with the operator of the telecommunication network 120. Specifically, the APs 130 and 140 may connect to a local area network by an Ethernet cable, and they typically receive, buffer, and transmit data traffic which is to be directed to and from the mobile communication device 110. The APs 130 and 140 may be connected to the core network 122 directly or via the Internet, as shown in Fig. 1. In general, for the APs 130 and 140 utilizing the WiFi technology, each of them may have, on average, a coverage varying from 20 meters in an area with obstacles (walls, stairways, elevators etc) to 100 meters in an area with a clear line of sight. Alternatively, the APs 130 and 140 may utilize another SRW technology, such as the Bluetooth technology, the Zigbee technology, or others, and the invention is not limited thereto.

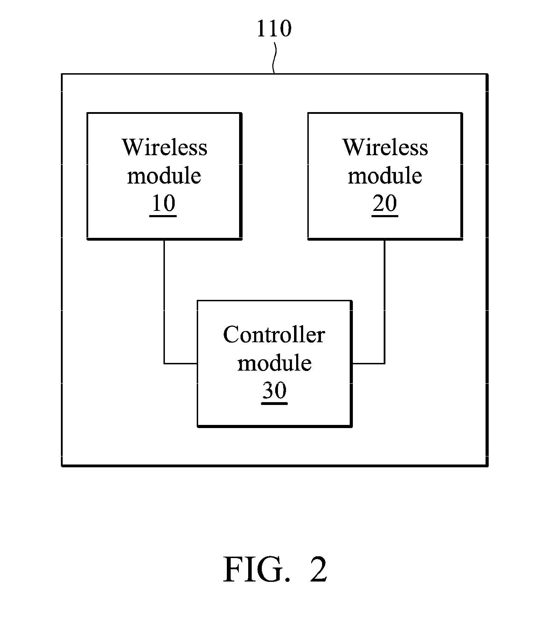

Fig. 2 is a block diagram illustrating the mobile communication device 110 according to an embodiment of the invention. The mobile communication device 110 comprises two wireless modules 10 and 20, and a controller module 30. The wireless module 10 is responsible for performing the functionality of wireless transmissions and receptions to and from the telecommunication network 120. The wireless module 20 is responsible for performing wireless transmissions and receptions to and from the AP 130 or 140. The controller module 30 is responsible for controlling the operations of the wireless modules 10 and 20, and other functional components (not shown), such as a display unit and/or keypad serving as the Man-Machine Interface (MMI), a storage unit storing the program codes of applications or communication protocols, a Global Positioning System (GPS) unit for obtaining location information, or others. Also, the controller module 30 controls the wireless modules 10 and 20 for performing the method for switching data traffic in the present invention.

To further clarify, each of the wireless modules 10 and 20 may be a respective Radio Frequency (RF) unit, and the controller module 30 may be a general-purpose processor or a Micro Control Unit (MCU) of a baseband unit. The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 2.4GHz, 3.6GHz, 4.9GHz, or 5GHz utilized in WiFi technology, or 900MHz, 1900MHz, or 2100MHz utilized in WCDMA systems, or 900MHz, 2100MHz, or 2.6GHz utilized in LTE/LTE-Advanced systems, or others depending on the wireless technology in use.

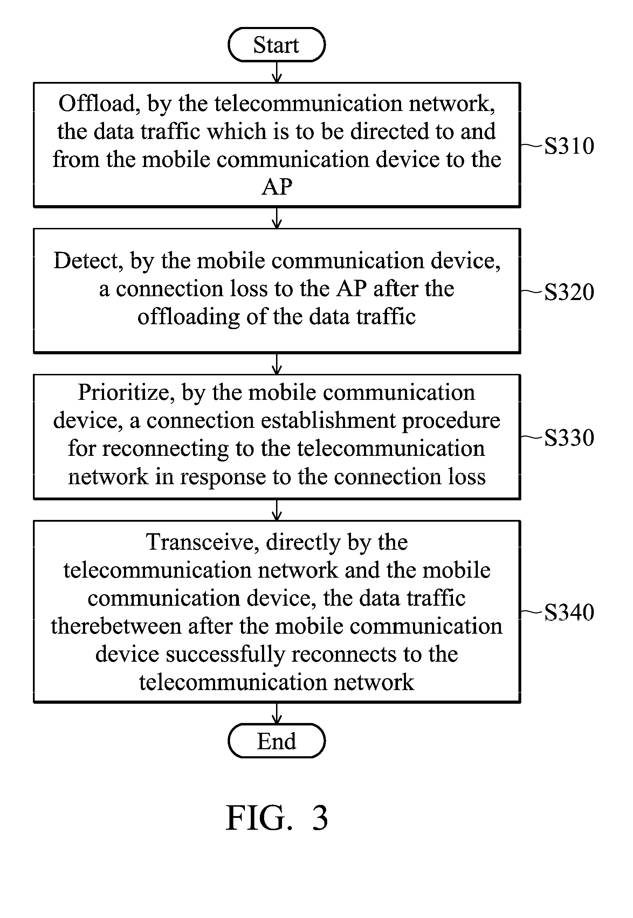

Fig. 3 is a flow chart illustrating the method for switching data traffic associated with a mobile communication device between a telecommunication network and an AP utilizing an SRW technology according to an embodiment of the invention. The method may be applied in the Media Access Control (MAC) layer, the Radio Resource Control (RRC) layer, the Non-Access Stratum (NAS) layer, and/or the Application layer of the communication protocol in use between the mobile communication device and the telecommunication network. In this embodiment, the mobile communication device initially obtains wireless services from the telecommunication network. To begin, the telecommunication network offloads the data traffic of the wireless services, which is to be directed to and from the mobile communication device, to the AP (step S310). That is, the mobile communication device is handed over from the telecommunication network to the AP. Next, the mobile communication device detects a connection loss to the AP after the offloading of the data traffic (step S320). In response to the connection loss, the mobile communication device prioritizes a connection establishment procedure for reconnecting to the telecommunication network (step S330). In one embodiment for step S330, the mobile communication device may set a cause in the Radio Resource Control (RRC) Connection Request message to indicate a high priority access, wherein the cause may be contained in any existing filed (e.g., the "establishmentCause" field) or a newly introduced field in the RRC Connection Request message. In another embodiment for step S330, the mobile communication device may set a small back-off value of the random access procedure for the connection establishment procedure, or set a high initial power or a high power increment step for preamble transmissions during the random access procedure. After the mobile communication device successfully reconnects to the telecommunication network, the telecommunication network and the mobile communication device directly transceives the data traffic therebetween (step S340). That is, the mobile communication device is switched back to be connected to the telecommunication network, and the telecommunication network cancels the offloading of the data traffic to the AP.

Note that, by prioritizing the connection establishment procedure, the mobile communication device may advantageously reconnect to the telecommunication network as soon as possible to prevent breaking off of the ongoing wireless services which the data traffic is associated with.

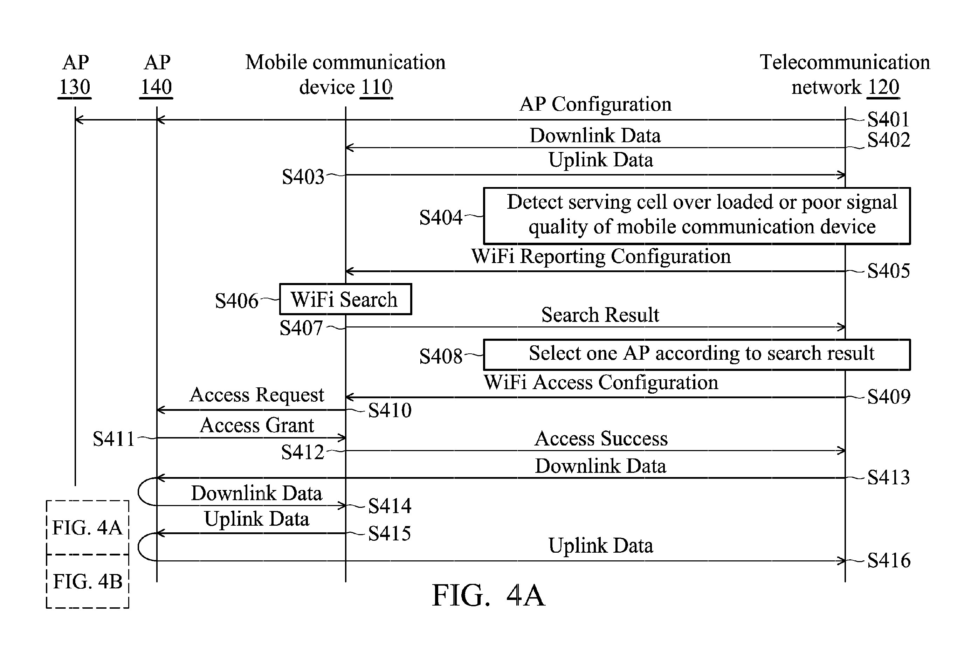

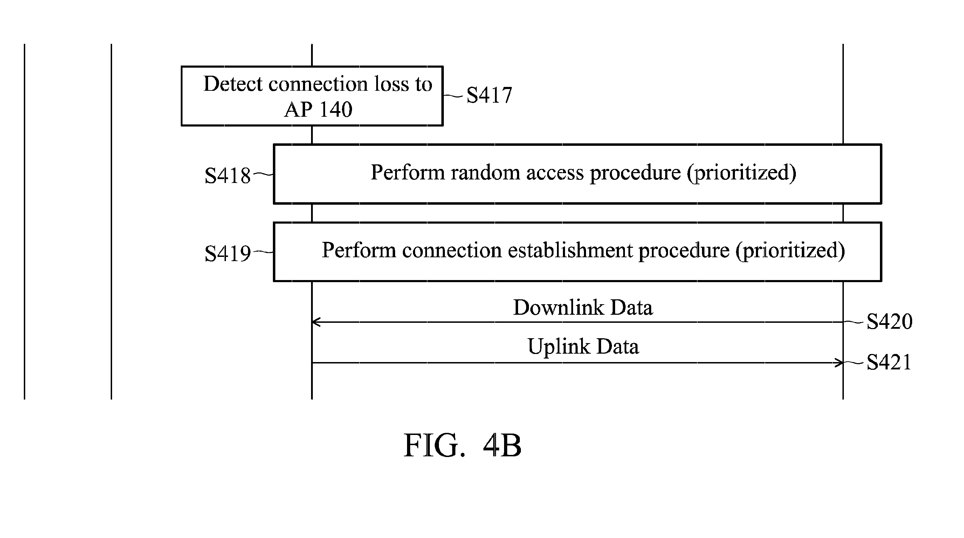

Figs. 4A and 4B show a message sequence chart illustrating the switching of data traffic associated with the mobile communication device 110 between the telecommunication network 120 and the AP 140 according to an embodiment of the invention. In this embodiment, the SRW technology utilized by the APs 130 and 140 is the WiFi technology. To begin, the telecommunication network 120 transmits a respective AP Configuration to the APs 130 and 140 for configuring the APs 130 and 140 with specific SSIDs, IP addresses, channel identifications, and operating frequencies, etc (step S401). The mobile communication device 110 initially obtains wireless services from the telecommunication network 120, thereby receiving downlink data and transmitting uplink data from and to the telecommunication network 120 (steps S402∼S403).

Later, when the telecommunication network 120 detects that the serving cell associated with the mobile communication device 110 is over loaded or that the signal quality of the mobile communication device 110 is poor (step S404), it transmits a WiFi reporting configuration to the mobile communication device 110 for initiating a search for APs (step S405). Specifically, a broadcast or a dedicated instruction/message may be used to contain the WiFi reporting configuration, and the WiFi reporting configuration may indicate the conditions for determining which of the searched APs should be included in the result of the search.

Next, the mobile communication device 110 turns on the SRW functionality (or called WiFi functionality in this embodiment), i.e., the wireless module 20, to search for APs according to the received WiFi reporting configuration (step S406), and then reports the result of the search to the telecommunication network 120 when finishing the search (step S407). Based on the received result of the search, the telecommunication network 120 selects one AP, i.e., the AP 140, among the searched APs (step S408), and then transmits a WiFi access configuration of the selected AP to the mobile communication device 110 (step S409). The WiFi access configuration may indicate the selected AP and also comprise a security password and/or a power saving parameter corresponding to the selected AP.

Subsequently, the mobile communication device 110 connects to the AP 140 according to the WiFi access configuration, by transmitting an Access Request to the AP 140 and receiving an Access Grant from the AP 140 (steps S410∼S411). After successfully connecting to the AP 140, the mobile communication device 110 transmits a notification (denoted as "Access Success" in Fig. 4A) to the telecommunication network 120 to inform the telecommunication network 120 about the success of access to the AP 140 (step S412).

After that, the telecommunication network 120 starts to offload the data traffic which is to be directed to or from the mobile communication device 110 to the AP 140. Specifically, the data traffic comprises downlink data and uplink data, wherein the downlink data is first transmitted from the telecommunication network 120 to the AP 140 (step S413), and then forwarded to the mobile communication device 110 (step S414). Likewise, the uplink data is first transmitted from the mobile communication device 110 to the AP 140 (step S415), and then forwarded to the telecommunication network 120 (step S416).

Next, the mobile communication device 110 detects a connection loss to the AP 140 (step S417). In response to the connection loss to the AP 140, the mobile communication device 110 performs a random access procedure (step S418) and a connection establishment procedure (step S419) for reconnecting to the telecommunication network 120, wherein one or both of the random access procedure and the connection establishment procedure is/are prioritized. Specifically, the random access procedure may be prioritized by setting a high initial power or a high power increment step may be used for preamble transmissions, or by setting a small back-off value of the random access procedure. The connection establishment procedure may be prioritized by setting a cause in the RRC Connection Request message to indicate a high priority access, wherein the cause may be any existing filed (e.g., the "establishmentCause" field) or a newly introduced field.

After the mobile communication device 110 successfully reconnects to the telecommunication network 120, the offloading of the data traffic is canceled. Consequently, the mobile communication device 110 receives downlink data directly from the telecommunication network 120 (step S420), and transmits uplink data directly to the telecommunication network 120 (step S421).

While the invention has been described by way of example and in terms of preferred embodiment, it is to be understood that the invention is not limited thereto. Those who are skilled in this technology can still make various alterations and modifications without departing from the scope and spirit of this invention.

Use of ordinal terms such as "first" and "second" in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. A mobile communication device, comprising:
a first wireless module performing wireless transmissions and receptions to and from a telecommunication network using a cellular technology;
a second wireless module performing wireless transmissions and receptions using a Short Range Wireless (SRW) technology; and
a controller module performing operations for communication controls, wherein the operations comprise detecting a connection loss to an Access Point (AP) via the second wireless module after data traffic which is to be directed to and from the mobile communication device has been offloaded from the telecommunication network to the AP, prioritizing a connection establishment procedure for reconnecting to the telecommunication network in response to the connection loss, and transceiving the data traffic directly to and from the telecommunication network after successfully reconnecting to the telecommunication network.

2. The mobile communication device of claim 1, wherein the connection establishment procedure is prioritized by transmitting a Radio Resource Control (RRC) Connection Request message with a cause indicating a high priority access to the telecommunication network via the first wireless module.

3. The mobile communication device of claim 1, wherein the connection establishment procedure is prioritized by setting a small back-off value of a random access procedure for the connection establishment procedure, or by setting a high initial power or a high power increment step for preamble transmissions during the random access procedure.

4. The mobile communication device of any of claims 1 to 3, wherein the operations are performed in compliance with a Media Access Control (MAC) layer, an RRC layer, a Non-Access Stratum (NAS) layer, or an Application layer of a communication protocol in use between the mobile communication device and the telecommunication network.

5. A method for switching data traffic associated with a mobile communication device between a telecommunication network and an Access Point (AP) utilizing a Short Range Wireless (SRW) technology, comprising:
offloading, by the telecommunication network, the data traffic which is to be directed to and from the mobile communication device to the AP;
detecting, by the mobile communication device, a connection loss to the AP after the offloading of the data traffic;
prioritizing, by the mobile communication device, a connection establishment procedure for reconnecting to the telecommunication network in response to the connection loss; and
transceiving, directly by the telecommunication network and the mobile communication device, the data traffic therebetween after the mobile communication device successfully reconnects to the telecommunication network.

6. The method of claim 5, wherein the connection establishment procedure is prioritized by transmitting a Radio Resource Control (RRC) Connection Request message with a cause indicating a high priority access to the telecommunication network.

7. The method of claim 5, wherein the connection establishment procedure is prioritized by setting a small back-off value of a random access procedure for the connection establishment procedure, or by setting a high initial power or a high power increment step for preamble transmissions during the random access procedure.

8. The method of any of claims 5 to 7, wherein the method is applied in a Media Access Control (MAC) layer, an RRC layer, a Non-Access Stratum (NAS) layer, or an Application layer of a communication protocol in use between the mobile communication device and the telecommunication network.
